# EUROPÄISCHE PATENTSCHRIFT

(11) **EP 3 188 927 B1**
(45) Veröffentlichungstag und Bekanntmachung des Hinweises auf die Patenterteilung: **09.04.2025**
(21) Anmeldenummer: 15742212.2
(22) Anmeldetag: 20.07.2015
(51) Int. Cl.: B60L 15/20, B62M 6/45, B62M 6/50

(54) **ANTRIEBSHILFE SOWIE VERFAHREN ZUM BEREITSTELLEN EINES UNTERSTÜTZENDEN DREHMOMENTS**
AUXILIARY DRIVE AND METHOD FOR PROVIDING TORQUE ASSISTANCE
DISPOSITIF D'ASSISTANCE À L'ENTRAÎNEMENT ET PROCÉDÉ PERMETTANT DE FOURNIR UN COUPLE D'ASSISTANCE

(30) Priorität: 05.09.2014 DE 102014217758
(43) Veröffentlichungstag der Anmeldung: 12.07.2017
(73) Patentinhaber: Bayerische Motoren Werke Aktiengesellschaft, 80809 München (DE)
(72) Erfinder: KAINDL, Stefan, 86316 Friedberg (DE)
(86) Internationale Anmeldenummer: PCT/EP2015/066542
(87) Internationale Veröffentlichungsnummer: WO 2016/034322

(56) Entgegenhaltungen:
- EP-A2- 2 865 364
- WO-A1-2012/141591
- DE-T2- 69 625 630
- JP-A- 2000 095 178
- JP-A- 2000 168 672
- JP-A- H1 159 557
- JP-A- H1 159 557
- JP-A- H10 250 671
- JP-A- H10 329 781
- KR-A- 20100 110 761
- US-A1- 2014 216 837
- US-B1- 6 276 471

## Beschreibung

Die Erfindung betrifft eine Antriebshilfe eines elektrischen Kraftfahrzeugs und ein solches Kraftfahrzeug sowie ein Verfahren zum Bereitstellen eines unterstützenden Drehmoments.

Kraftfahrzeuge, insbesondere Zweiräder, lassen sich nur schwer in einem unebenen Gelände oder über Hindernisse wie eine Bordsteinkante manuell bewegen. Zudem muss beim manuellen Rangieren die Balance des Zweirads gehalten werden, wodurch das manuelle Rangieren eines Zweirads weiter erschwert ist. Generell erhöht sich die Schwierigkeit mit dem Gewicht des zu rangierenden Kraftfahrzeugs, sodass das manuelle Rangieren von elektrischen Zweirädern besonders schwer ist. Bei elektrischen Zweirädern muss einerseits die Balance gehalten werden und andererseits weisen elektrische Zweiräder aufgrund der Batterien ein höheres Gewicht auf.

Aus dem Stand der Technik sind Antriebshilfen bekannt, die ein manuelles Rangieren eines Zweirads unterstützen. Die aus dem Stand der Technik bekannten Antriebshilfen weisen jeweils ein Aktivierungselement wie einen Schalter oder einen Stellhebel auf, der vom Bediener des Zweirads gedrückt bzw. aktiviert werden muss, damit die Antriebshilfe ein unterstützendes Drehmoment bereitstellt.

Die JP H10 329781 A offenbart eine Antriebshilfe für ein Zweirad, wobei die Antriebshilfe einen Elektromotor und am Lenker zwei erste Sensoren aufweist, die auf Krafteinwirkungen reagieren, die zwar nicht ausschließlich, aber unter anderem durch ein manuelles Rangieren des Zweirads durch einen Bediener verursacht sein können.

Die JP H11 59557 A offenbart ein Fahrrad mit einem unterstützenden Elektromotor, wobei im Lenker des Fahrrads Sensoren vorgesehen sind, die eine Schiebekraft erfassen. Basierend auf der erfassten Schiebekraft wird der Elektromotor angesteuert, der eine unterstützende Kraft für das Schieben des Fahrrads bereitstellt.

Eine ähnliche Vorrichtung ist in der JP H10 250671 A gezeigt. Ein Sensor, der die Schiebekraft erfasst, weist dabei einen Verschiebemechanismus auf, der in eine Grundstellung zurückkehrt, wenn das Fahrrad nicht am Verschiebemechanismus angeschoben wird.

Ein weiteres Fahrrad mit Elektromotor ist in der JP 2000 168672 A offenbart. Wird ein Schalter umgelegt, so stellt der Elektromotor beim Schieben des Fahrrads eine unterstützende Kraft bereit.

Die JP 2000 096178 A zeigt ein Fahrrad mit unterstützendem Elektromotor. Am Lenker ist ein Drehhebel angebracht. Basierend auf der Auslenkung des Drehhebels wird vom Elektromotor eine unterstützende Kraft zum Schieben des Fahrrads bereitgestellt.

KR 2010 0110761 zeigt ein Zweirad mit einem verdrehbaren Lenker, um das Zweirad während der Fahrt zu stabilisieren.

US 2014 / 216 837 A1 zeigt ein Zweirad, nämlich einen Roller, der beim Fahren Krafteinwirkungen auf eine vorderseitige Lenkstange erfasst, um den Roller während der Fahrt zu lenken. Der Antrieb des Rollers muss durch den Bediener bzw. Fahrer selbst erfolgen; ein Elektromotor ist hierzu nicht vorgesehen. Die US 6 276 471 B1 offenbart einen Zustellerwagen, bei dem in einer Achse oder an den Rädern ein Elektromotor angeordnet sein kann, der einen Nutzer des Zustellerwagens beim Rangieren unterstützt.

WO 2012 / 141 591 A1 zeigt einen Transportwagen mit vier Rädern. Gemäß einer Variante können auch drei statt vier Räder vorgesehen sein.

DE 696 25 630 T2 zeigt ein Zweirad, dessen Motordrehzahl, wenn der Fahrer abgestiegen ist, auf einen Bruchteil verringerbar ist.

Die EP 2 865 364 A2 offenbart eine manuell angetriebene Gehhilfe mit vier Rädern, bei der ein Elektromotor den Nutzer unterstützt.

Als nachteilig hat sich bei den bekannten Antriebshilfen wie in JP H10 250671 A herausgestellt, dass die Bedienung aufgrund der gleichzeitigen Koordination des Aktivierens und dem manuellen Rangieren schwierig ist. Gerade bei Aktivierungselementen, die unterschiedliche Unterstützungsgeschwindigkeiten bereitstellen können, wie einem Stellhebel, ist die Koordination schwierig, da die Balance des Zweirads und das Aktivierungselement gleichzeitig in einer bestimmten Stellung gehalten werden müssen.

Die Aufgabe der Erfindung ist es, eine Antriebshilfe bereitzustellen, die das manuelle Rangieren des Kraftfahrzeugs mit einfachen Mitteln und bedienerfreundlich unterstützt.

Die Aufgabe wird erfindungsgemäß durch eine Antriebshilfe eines elektrischen Kraftfahrzeugs gemäß Anspruch 1.

Der Grundgedanke der Erfindung ist es, eine Antriebshilfe derart auszubilden, dass die Antriebshilfe selbsttätig erkennt, wann ein unterstützendes, das Kraftfahrzeug antreibendes Drehmoment bereitgestellt werden soll. Das Ziehen und Schieben des Kraftfahrzeugs durch den Bediener wird automatisch detektiert, sodass der Bediener kein extra ausgebildetes Aktivierungselement manuell betätigen muss. Hierdurch erleichtert sich die Bedienung der Antriebshilfe erheblich und die natürliche Zieh- und Schiebbewegung wird unterstützt.

Durch den Belegungssensor ist eine Sicherheitsfunktion geschaffen, sodass das unterstützende Drehmoment nur dann bereitgestellt wird, wenn die vom Fahrer auf den Lenker aufgebrachte Kraft tatsächlich ein Ziehen bzw. Schieben zum manuellen Rangieren ist. Beispielsweise könnte es vorstellbar sein, dass ein Fahrer während des Fahrens gegen den Lenker des Zweirads in Fahrtrichtung drückt. Durch die Sicherheitsfunktion ist dann gewährleistet, dass hierbei kein unterstützendes Drehmoment bereitgestellt wird.

Die Erfindung sieht vor, dass der Sensor im Bereich von definierten Angriffspunkten, an denen der Bediener das Kraftfahrzeug zum manuellen Rangieren erfasst, vorhanden ist. Je nach Ausbildung des Kraftfahrzeugs weist dieses bestimmte Angriffspunkte auf, an denen der Bediener typischerweise das Kraftfahrzeug anfasst, um dieses manuell zu rangieren. Da der Sensor im Bereich dieser Angriffspunkte angeordnet ist, kann er unmittelbar das Ziehen bzw. Schieben des elektrischen Kraftfahrzeugs durch den Bediener detektieren.

Insbesondere ist der Sensor an einem Lenker des elektrischen Kraftfahrzeugs oder am Übergang vom Lenker zu einer Lenksäule angeordnet. Gerade bei einem Zweirad ergreift der Bediener des Kraftfahrzeugs typischerweise den Lenker, um das Kraftfahrzeug manuell zu rangieren. Dies wird von dem dort angeordneten Sensor entsprechend unmittelbar erkannt.

Die Erfindung sieht vor, dass der Sensor ein Kraftsensor ist, der eine Kraft detektiert. Der Sensor detektiert somit die vom Bediener auf das elektrische Kraftfahrzeug ausgeübte Kraft, um so ein Ziehen und Schieben durch den Bediener zu detektieren. Der Aktivierungszustand, der vom Sensor erfasst wird, ist die vom Bediener auf das elektrische Kraftfahrzeug ausgeübte Kraft.

Insbesondere ist die durch das unterstützende Drehmoment hervorgerufene Geschwindigkeit des elektrischen Kraftfahrzeugs proportional zur detektierten Kraft. Der Sensor erfasst somit den Betrag der ausgeübten Kraft. Die Antriebshilfe stellt in Abhängigkeit der detektierten Kraft ein unterstützendes Drehmoment derart bereit, dass die dadurch hervorgerufene Geschwindigkeit proportional zur Kraft ist. Somit ist eine kraftanaloge Schiebehilfe ausgebildet. Dies erleichtert das manuelle Rangieren, da eine höhere Kraft beispielsweise auf eine höhere Steigung zurückschließen lässt. Das dann höhere unterstützende Drehmoment führt dazu, dass ein manuelles Rangieren an einem steilen Hang den gleichen Kraftaufwand wie in der Ebene erfordern kann.

Die Erfindung sieht vor, dass der Sensor ein Ziehen und Schieben in eine Richtung erfasst, die im Wesentlichen parallel zur Laufrichtung wenigstens eines Rades ist, insbesondere des Vorderrades. Hierdurch erfasst der Sensor nur diejenige Kraftkomponente, die auf die definierten Angriffspunkte ausgeübt wird, die parallel zur Laufrichtung des Rades ist. Ein Drücken auf den Lenker eines Zweirads von oben wird somit nur zu einem Bruchteil vom Sensor als Schieben bzw. Ziehen erkannt, da die Hauptkomponente der Kraft senkrecht zur Laufrichtung des Vorderrades ist. Das von der Antriebshilfe bereitgestellte Drehmoment unterstützt somit nur ein tatsächliches Schieben bzw. Ziehen entlang des vorgesehenen Weges.

Insbesondere wird nur dann der Elektromotor als Rangierunterstützung von einer Steuerung aktiviert, wenn die detektierte Kraft für das Ziehen/Schieben größer 25 N, insbesondere größer 50 N ist.

Ferner kann der Belegungssensor die Belegung des Fahrersitzes detektieren.

Insbesondere ist der Elektromotor der Antriebsmotor des Kraftfahrzeugs. Hierdurch ist ein besonders einfacher und leichter Aufbau des elektrischen Kraftfahrzeugs geschaffen, da kein zusätzlicher Motor für die Antriebshilfe eingebaut werden muss.

Ferner betrifft die Erfindung ein Verfahren zum Bereitstellen eines unterstützenden Drehmoments mit einer Antriebshilfe nach einem der Ansprüche 1 bis 9, bei dem
a) der wenigstens eine Sensor einen Aktivierungszustand detektiert,
b) eine Steuerung in Abhängigkeit vom erfassten Aktivierungszustand den Elektromotor ansteuert, und
c) der Elektromotor ein unterstützendes Antriebsdrehmoment bereitstellt, wobei die Steuerung den Elektromotor nur dann ansteuert, wenn vom Sensor eine auf das Kraftfahrzeug aufgebrachte Kraft detektiert wird und gleichzeitig der Belegungssensor die Nichtbelegung des entsprechend zugeordneten Sitzes erkennt.

Die Antriebshilfe stellt automatisch ein unterstützendes Antriebsdrehmoment über den Elektromotor bereit, wenn dies erforderlich ist. Der Sensor erfasst einen Aktivierungszustand, der von der Steuerung als ein solcher identifiziert wird. Der Bediener muss somit kein Aktivierungselement betätigen, um ein unterstützendes Drehmoment zu erhalten.

Ein weiterer Aspekt der Erfindung sieht vor, dass der Sensor eine Kraft detektiert, deren Wirkrichtung im Wesentlichen parallel zur Laufrichtung eines Rades des elektrischen Kraftfahrzeugs ist, insbesondere des Vorderrades. Entsprechend wird, wie zuvor schon erläutert, das unterstützende Drehmoment nur dann bereitgestellt, wenn eine Kraft ausgeübt wird, die auf ein Ziehen bzw. Schieben des Kraftfahrzeugs aufgrund eines manuellen Rangierens zurückschließen lässt.

Ferner kann der Elektromotor ein zur detektierten Kraft proportionales, unterstützendes Drehmoment erzeugen, sodass die durch das unterstützende Drehmoment hervorgerufene Geschwindigkeit des elektrischen Kraftfahrzeugs proportional zur detektierten Kraft ist. Das bereitgestellte unterstützende Drehmoment ist somit kraftproportional zur aufgebrachten Kraft des Bedieners.

Erfindungsgemäß, wird ein Belegungssensor verwendet, der die Anwesenheit eines Fahrers des elektrischen Kraftfahrzeugs detektiert, wobei die Steuerung den Elektromotor nur dann ansteuert, wenn der Belegungssensor ein Nichtbelegungssignal sendet.

Weitere Vorteile und Eigenschaften der Erfindung ergeben sich aus der nachfolgenden Beschreibung und den Zeichnungen, auf die Bezug genommen wird.

In den Zeichnungen zeigen:
- Figur 1 eine Frontansicht eines erfindungsgemäßen Kraftfahrzeugs,
- Figur 2 eine schematische Darstellung der dabei eingesetzten Antriebshilfe,
- Figur 3 eine Draufsicht auf einen Lenker eines Kraftfahrzeugs nach Figur 1,
- Figur 4 eine schematische Darstellung eines geschobenen Kraftfahrzeugs an einem Hang, und
- Figur 5 ein Diagramm, das die von der Antriebshilfe hervorgerufene unterstützende Geschwindigkeit in Abhängigkeit des vom Bediener ausgeübten Drucks zeigt.

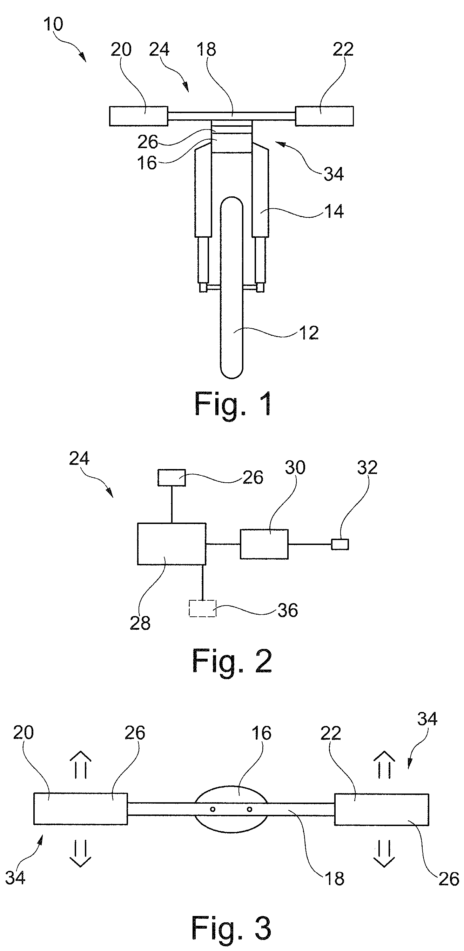

In Figur 1 ist ein Kraftfahrzeug 10 in Form eines Zweirads in einer Frontansicht gezeigt.

Das Kraftfahrzeug 10 weist ein Vorderrad 12 auf, das über eine Gabel 14 und eine Lenksäule 16 mit einem Lenker 18 gekoppelt ist, der einen ersten Griff 20 sowie einen zweiten Griff 22 an seinen axialen Enden aufweist.

Das Kraftfahrzeug 10 umfasst ferner eine Antriebshilfe 24, die in Figur 2 schematisch gezeigt ist.

Die Antriebshilfe 24 weist einen Sensor 26 auf, der ein Ziehen und/oder Schieben des Kraftfahrzeugs 10 erkennt. Der Sensor 26 kann dabei als ein Kraftsensor ausgebildet sein, der eine von dem Bediener des Kraftfahrzeugs 10 auf das Kraftfahrzeug 10 ausgeübte Kraft erfasst und an eine Steuerung 28 übermittelt, die die vom Sensor 26 erfassten Daten auswertet. Die Steuerung 28 kann dann die vom Sensor 26 erfassten Daten als einen Aktivierungszustand für die Antriebshilfe 24 detektieren.

In der Steuerung 28 wird der vom Sensor 26 erfasste Aktivierungszustand verarbeitet, wobei die Steuerung 28 nicht nur einen Aktivierungszustand feststellt, sondern auch die Größe der vom Bediener aufgebrachten Kraft ermittelt. Ferner wird ausgewertet, ob es sich um ein Schieben oder ein Ziehen handelt, also die Richtung der Krafteinwirkung.

In Abhängigkeit der aufgebrachten und festgestellten Kraft steuert die Steuerung 28 einen Elektromotor 30 entsprechend an, sodass der Elektromotor 30 ein Antriebsrad 32 derart mit einem Drehmoment antreibt, dass die vom Antriebsrad 32 erzeugte Geschwindigkeit des Kraftfahrzeugs 10 linear proportional zur detektierten Kraft ist. Daher stellt die Antriebshilfe 24 eine kraftanaloge Antriebshilfe dar.

Damit die Antriebshilfe 24 das Ziehen und/oder Schieben des Kraftfahrzeugs 10 erkennt, ist der Sensor 26 in einem Bereich von definierten Angriffspunkten 34 (siehe Figur 1) angeordnet. Die Angriffspunkte 34 sind als Stellen definiert, an denen ein Bediener das Kraftfahrzeug typischerweise anfasst, um es manuell zu verschieben.

In der in Figur 1 gezeigten Ausführungsform ist der Sensor 26 beispielsweise am Übergang vom Lenker 18 zur Lenksäule 16 vorgesehen. Der Bediener des Kraftfahrzeugs greift typischerweise im Bereich des Lenkers 18 oder der Lenksäule 16 an, um das Kraftfahrzeug manuell zu ziehen bzw. zu schieben. Dieser Bereich stellt demnach ebenfalls den Bereich von definierten Angriffspunkten 34 dar, denn die Kraft zum Ziehen/Schieben wird in diesem Bereich auf das Chassis übertragen.

In Figur 3 ist eine Draufsicht auf einen Lenker 18 des Kraftfahrzeugs 10 gemäß einer weiteren Ausführungsform gezeigt. Bei dieser Ausführungsform sind zwei Sensoren 26 im Lenker 18 selbst angeordnet, insbesondere in den Griffen 20, 22, die demnach die definierten Angriffspunkte 34 ausbilden.

Generell ist der wenigstens eine Sensor 26 derart im oder am Kraftfahrzeug 10 angeordnet, dass er lediglich ein Ziehen und/oder Schieben in eine Richtung erfasst, die im Wesentlichen parallel zur Laufrichtung des Antriebsrads 32 oder des Vorderrads 12 ist. Hierdurch ist sichergestellt, dass das von dem wenigstens einen Sensor 26 detektierte Ziehen bzw. Schieben tatsächlich auf ein manuelles Rangieren des Kraftfahrzeugs 10 zurückzuführen ist.

Bei dem Antriebsrad 32 kann es sich insbesondere um das Vorderrad 12 handeln.

In einer weiteren Ausführungsform der Erfindung ist zudem vorgesehen, dass die Antriebshilfe 24 zusätzlich einen Belegungssensor 36 aufweisen kann, der in Figur 2 gestrichelt dargestellt ist.

Der Belegungssensor 36 erkennt die Belegung eines Fahrzeugsitzes, insbesondere des Fahrersitzes, und ist ebenfalls mit der Steuerung 28 gekoppelt. Die Steuerung 28 steuert den Elektromotor 30 nur dann an, wenn vom Sensor 26 eine auf das Kraftfahrzeug 10 aufgebrachte Kraft detektiert wird und gleichzeitig der Belegungssensor 36 die Nichtbelegung des entsprechend zugeordneten Sitzes erkennt. Hierüber ist sichergestellt, dass die Antriebshilfe 24 kein zusätzliches Drehmoment bereitstellt, wenn der Fahrer auf dem Sitz sitzt und während der Fahrt oder an einer Ampel gegen den Lenker 18 drückt.

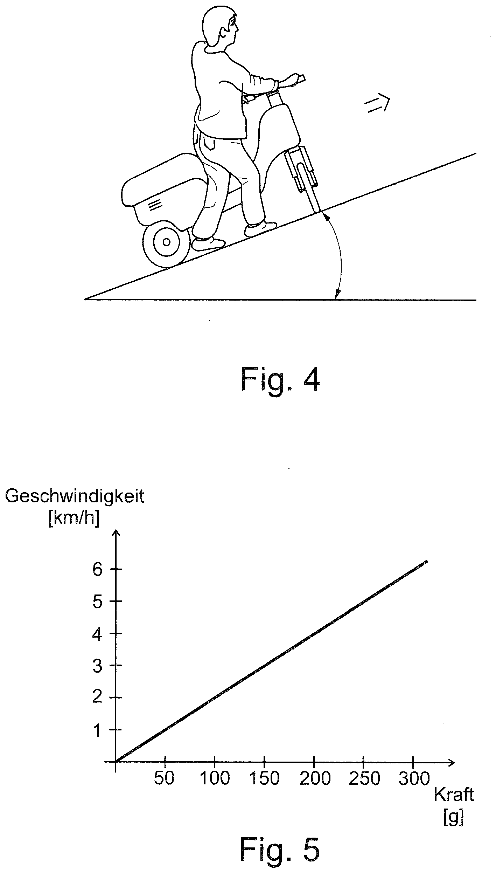

Aus den Figuren 4 und 5 geht ferner hervor, dass die Antriebshilfe 24 kraftanalog ausgebildet ist, da sie ein Drehmoment bereitstellt, welches proportional zu der vom Sensor 26 erfassten Kraft ist.

Hierdurch wird beispielsweise in Abhängigkeit der Steigung, entlang der ein Bediener des Kraftfahrzeugs 10 dieses schiebt (Figur 4), eine Geschwindigkeit über die Antriebshilfe 24 bereitgestellt, die proportional zu der aufgebrachten Kraft bzw. dem Druck ist (Figur 5).

Hierdurch wird das Schieben auch bei sehr steilen Anstiegen über die Antriebshilfe 24 entsprechend erleichtert, sodass es sich für den Bediener des Kraftfahrzeugs 10 beispielsweise aufgrund des bereitgestellten, unterstützenden Drehmoments wie ein manuelles Rangieren in der Ebene anfühlt.

Bei dem Elektromotor 30, der das unterstützende Drehmoment bereitstellt, handelt es sich insbesondere um den Antriebsmotor des elektrischen Kraftfahrzeugs 10. Hierdurch kann das Gewicht des Kraftfahrzeugs 10 trotz der zusätzlich vorgesehenen Antriebshilfe 24 gering gehalten werden. Die Steuerung 28 der Antriebshilfe 24 kann als Teil der vorhandenen Steuerung des Kraftfahrzeugs 10 ausgebildet sein. Als zusätzliche Bauteile fallen daher lediglich die Sensoren 26 sowie die Verkabelung der Sensoren 26 bis zur Steuerung 28 ins Gewicht.

Mit der erfindungsgemäßen Antriebshilfe 24 ist es demnach möglich, ein Kraftfahrzeug 10 einfach und bedienerfreundlich manuell zu rangieren, da die natürliche Schiebe- bzw. Ziehbewegung von der Antriebshilfe 24 unterstützt wird. Zur Unterstützung ist ein manuelles Aktivieren über ein Aktivierungselement nicht nötig, wodurch der Bedienkomfort entsprechend erhöht ist.

## Patentansprüche

1. Antriebshilfe (24) zur Unterstützung des manuellen Rangierens eines elektrischen Kraftfahrzeugs (10), nämlich eines elektrischen Zweirads, durch einen Bediener,
- mit einem das Kraftfahrzeug (10) bewegenden Elektromotor (30),
- mit wenigstens einem ersten Sensor (26), wobei der erste Sensor (26)
a) im Bereich wenigstens eines definierten Angriffspunkts (34) des Kraftfahrzeugs (10) angeordnet ist, an dem ein Bediener das Kraftfahrzeug (10) zum manuellen Rangieren anfasst,
b) dazu eingerichtet ist, ein manuelles Rangieren, d.h. Ziehen und/oder Schieben des elektrischen Kraftfahrzeugs (10) durch den Bediener zu detektieren, und
c) ferner eingerichtet ist, ein Schieben von einem Ziehen zu unterscheiden, und
d) ein Ziehen und/oder Schieben in einer Richtung erfasst, die im Wesentlichen parallel zur Laufrichtung wenigstens eines Rades (12, 32) ist, und
- mit einem zweiten Sensor, nämlich ein Belegungssensor (36), der eine Belegung oder Nichtbelegung eines Fahrzeugsitzes detektiert,
- wobei eine Steuerung (28) dazu eingerichtet ist, den Elektromotor (30) in Abhängigkeit von einem vom ersten Sensor (26) erfassten Aktivierungszustand anzusteuern, sodass der Elektromotor (30) ein unterstützendes, das Kraftfahrzeug (10) antreibendes Drehmoment erzeugt, um das Ziehen und/oder Schieben des elektrischen Kraftfahrzeugs (10) zu unterstützen,
- wobei die Steuerung (28) dazu eingerichtet ist, den Elektromotor (30) nur dann anzusteuern, wenn vom ersten Sensor (26) eine auf das Kraftfahrzeug (10) aufgebrachte Kraft detektiert wird und gleichzeitig der Belegungssensor (36) die Nichtbelegung des Fahrzeugsitzes erkennt,
- sodass der Elektromotor (30) das unterstützende Drehmoment nur dann erzeugt, wenn der Belegungssensor (36) eine Nichtbelegung des Fahrzeugsitzes feststellt und gleichzeitig vom ersten Sensor (26) eine auf das Kraftfahrzeug (10) aufgebrachte Kraft detektiert wird.

2. Antriebshilfe (24) nach Anspruch 1, **dadurch gekennzeichnet, dass** zwei erste Sensoren (26) im Bereich von zwei definierten Angriffspunkte (34), an denen der Bediener das Kraftfahrzeug (10) zum manuellen Rangieren anfasst, vorhanden sind.

3. Antriebshilfe (24) nach Anspruch 1 oder 2, **dadurch gekennzeichnet, dass** der wenigstens eine erste Sensor (26)
- an einem Lenker (18) des elektrischen Kraftfahrzeugs (10) oder
- an einem Übergang vom Lenker (18) zu einer Lenksäule (16) angeordnet ist.

4. Antriebshilfe (24) nach einem der vorhergehenden Ansprüche, **dadurch gekennzeichnet, dass** der erste Sensor (26) ein Kraftsensor ist, der die auf das Kraftfahrzeug (10) aufgebrachte Kraft detektiert.

5. Antriebshilfe (24) nach Anspruch 4, **dadurch gekennzeichnet, dass** eine durch das unterstützende Drehmoment hervorgerufene Geschwindigkeit des elektrischen Kraftfahrzeugs (10) proportional zur detektierten Kraft ist.

6. Antriebshilfe (24) nach einem der vorhergehenden Ansprüche, **dadurch gekennzeichnet, dass** der erste Sensor (26) das Ziehen und/oder Schieben in Richtung im Wesentlichen parallel zur Laufrichtung eines Antriebsrades (32) und/oder Vorderrades (12) erfasst.

7. Antriebshilfe (24) nach einem der vorhergehenden Ansprüche, **dadurch gekennzeichnet, dass** der Belegungssensor (36) die Belegung oder Nichtbelegung des Fahrersitzes detektiert.

8. Antriebshilfe (24) nach einem der vorhergehenden Ansprüche, **dadurch gekennzeichnet, dass** der Elektromotor (30) der Antriebsmotor des Kraftfahrzeugs (10) ist.

9. Elektrisches Kraftfahrzeug (10), das als elektrisches Zweirad ausgebildet ist und eine Antriebshilfe (24) nach einem der vorhergehenden Ansprüche umfasst.

10. Verfahren zum Bereitstellen eines unterstützenden Drehmoments mit einer Antriebshilfe (24) nach einem der Ansprüche 1 bis 8, bei dem
a) der wenigstens eine erste Sensor (26) einen Aktivierungszustand detektiert,
b) eine Steuerung (28) in Abhängigkeit vom erfassten Aktivierungszustand den Elektromotor (30) ansteuert und
c) der Elektromotor (30) ein unterstützendes Antriebsdrehmoment bereitstellt, wobei die Steuerung (28) den Elektromotor (30) nur dann ansteuert, wenn
- vom ersten Sensor (26) eine auf das Kraftfahrzeug (10) aufgebrachte Kraft detektiert wird und gleichzeitig
- der Belegungssensor (36) die Nichtbelegung des Fahrzeugsitzes erkennt.

## Claims

1. Drive aid (24) for assisting an operator when manual manoeuvring an electric motor vehicle (10), specifically a two-wheeled electric vehicle,
- comprising an electric motor (30) moving the motor vehicle (10),
- comprising at least one first sensor (26), wherein the first sensor (26)
a) is arranged in the region of at least one defined engagement point (34) of the motor vehicle (10), at which an operator holds the motor vehicle (10) for manual manoeuvring;
b) is designed to detect manual manoeuvring, i.e. the operator pulling and/or pushing the electric motor vehicle (10), and
c) is also designed to distinguish pushing from pulling, and
d) pulling and/or pushing in a direction substantially parallel to the direction of movement of at least one wheel (12, 32) is sensed, and
- comprising a second sensor, specifically an occupancy sensor (36), which detects occupancy or non-occupancy of a vehicle seat,
- wherein a controller (28) is designed to actuate the electric motor (30) depending on an activation state sensed by the first sensor (26), so that the electric motor (30) generates an assisting torque driving the motor vehicle (10) in order to assist with pulling and/or pushing the electric motor vehicle (10),
- wherein the controller (28) is designed to actuate the electric motor (30) only when a force applied to the motor vehicle (10) is detected by the first sensor (26) and at the same time the occupancy sensor (36) identifies non-occupancy of the vehicle seat,
- so that the electric motor (30) generates the assisting torque only when the occupancy sensor (36) determines non-occupancy of the vehicle seat and at the same time a force applied to the motor vehicle (10) is detected by the first sensor (26).

2. Drive aid (24) according to Claim 1, **characterized in that** two first sensors (26) are present in the region of two defined engagement points (34), at which the operator holds the motor vehicle (10) for manual manoeuvring.

3. Drive aid (24) according to Claim 1 or 2, **characterized in that** the at least one first sensor (26) is arranged
- on a handlebar (18) of the electric motor vehicle (10) or
- at a transition point from the handlebar (18) to a steering column (16).

4. Drive aid (24) according to any of the preceding claims, **characterized in that** the first sensor (26) is a force sensor, which detects the force applied to the motor vehicle (10).

5. Drive aid (24) according to Claim 4, **characterized in that** a speed of the electric motor vehicle (10) induced by the assisting torque is proportional to the detected force.

6. Drive aid (24) according to any of the preceding claims, **characterized in that** the first sensor (26) senses pulling and/or pushing in a direction substantially parallel to the direction of movement of a drive wheel (32) and/or front wheel (12).

7. Drive aid (24) according to any of the preceding claims, **characterized in that** the occupancy sensor (36) detects occupancy or non-occupancy of the rider's seat.

8. Drive aid (24) according to any of the preceding claims, **characterized in that** the electric motor (30) is the drive motor of the motor vehicle (10).

9. Electric motor vehicle (10), which is designed as a two-wheeled electric vehicle and comprises a drive aid (24) according to any of the preceding claims.

10. Method for providing an assisting torque using a drive aid (24) according to any of Claims 1 to 8, in which
a) the at least one first sensor (26) detects an activation state,
b) a controller (28) actuates the electric motor (30) depending on the activation state sensed and
c) the electric motor (30) provides an assisting drive torque, wherein the controller (28) actuates the electric motor (30) only when
- a force applied to the motor vehicle (10) is detected by the first sensor (26) and at the same time
- the occupancy sensor (36) identifies non-occupancy of the vehicle seat.

## Revendications

1. Dispositif d'assistance à l'entraînement (24) permettant d'assister des manœuvres manuelles d'un véhicule automobile électrique (10), notamment d'un deux-roues électrique, par un utilisateur,
- comprenant un moteur électrique (30) déplaçant le véhicule automobile (10),
- comprenant au moins un premier capteur (26), dans lequel le premier capteur (26)
a) est disposé au niveau d'au moins un point d'attaque défini (34) du véhicule automobile (10) auquel un utilisateur saisit le véhicule automobile (10) pour des manœuvres manuelles,
b) est conçu pour détecter des manœuvres manuelles, c'est-à-dire une traction et/ou une poussée du véhicule automobile (10) par l'utilisateur, et
c) est en outre conçu pour faire la différence entre une poussée et une traction, et
d) détecte une traction et/ou une poussée dans une direction qui est substantiellement parallèle au sens de la marche d'au moins une roue (12, 32), et
- comprenant un deuxième capteur, notamment un capteur d'occupation (36) qui détecte une occupation ou non-occupation d'un siège de véhicule,
- dans lequel un dispositif de commande (28) est conçu pour piloter le moteur électrique (30) en fonction d'un état d'activation détecté par le premier capteur (26) de sorte que le moteur électrique (30) produit un couple d'assistance, entraînant le véhicule automobile (10), afin d'assister la traction et/ou la poussée du véhicule automobile électrique (10),
- dans lequel le dispositif de commande (28) est conçu pour piloter le moteur électrique (30) uniquement si le premier capteur (26) détecte une force exercée sur le véhicule automobile (10) et le capteur d'occupation (36) identifie en même temps la non-occupation du siège de véhicule,
- de sorte que le moteur électrique (30) ne produit le couple d'assistance que si le capteur d'occupation (36) constate une non-occupation du siège de véhicule et le premier capteur (26) détecte en même temps une force exercée sur le véhicule automobile (10).

2. Dispositif d'assistance à l'entraînement (24) selon la revendication 1, **caractérisé en ce que** deux premiers capteurs (26) sont présents au niveau de deux points d'attaque définis (34) auxquels l'utilisateur saisit le véhicule automobile (10) pour des manœuvres manuelles.

3. Dispositif d'assistance à l'entraînement (24) selon la revendication 1 ou 2, **caractérisé en ce que** ledit au moins un premier capteur (26) est disposé
- au niveau d'un guidon (18) du véhicule automobile électrique (10), ou
- au niveau d'une transition entre le guidon (18) et une colonne de direction (16).

4. Dispositif d'assistance à l'entraînement (24) selon l'une quelconque des revendications précédentes, **caractérisé en ce que** le premier capteur (26) est un capteur de force qui détecte la force exercée sur le véhicule automobile (10).

5. Dispositif d'assistance à l'entraînement (24) selon la revendication 4, **caractérisé en ce qu'**une vitesse du véhicule automobile électrique (10), provoquée par le couple d'assistance, est proportionnelle à la force détectée.

6. Dispositif d'assistance à l'entraînement (24) selon l'une quelconque des revendications précédentes, **caractérisé en ce que** le premier capteur (26) détecte la traction et/ou la poussée dans une direction substantiellement parallèle au sens de la marche d'une roue motrice (32) et/ou d'une roue avant (12).

7. Dispositif d'assistance à l'entraînement (24) selon l'une quelconque des revendications précédentes, **caractérisé en ce que** le capteur d'occupation (36) détecte l'occupation ou la non-occupation du siège de conducteur.

8. Dispositif d'assistance à l'entraînement (24) selon l'une quelconque des revendications précédentes, **caractérisé en ce que** le moteur électrique (30) est le moteur d'entraînement du véhicule automobile (10).

9. Véhicule automobile électrique (10) qui est réalisé sous la forme d'un deux-roues électrique et comprend un dispositif d'assistance à l'entraînement (24) selon l'une quelconque des revendications précédentes.

10. Procédé permettant de fournir un couple d'assistance par un dispositif d'assistance à l'entraînement (24) selon l'une quelconque des revendications 1 à 8, dans lequel
a) ledit au moins un premier capteur (26) détecte un état d'activation,
b) un dispositif de commande (28) pilote le moteur électrique (30) en fonction de l'état d'activation détecté, et
c) le moteur électrique (30) fournit un couple d'entraînement, le dispositif de commande (28) ne pilotant le moteur électrique (30) que si
- le premier capteur (26) détecte une force 10 appliquée au véhicule automobile (10), et en même temps
- le capteur d'occupation (36) identifie la non-occupation du siège de véhicule.
